(19)

(11) EP 1 282 342 B1

(12) **EUROPÄISCHE PATENTSCHRIFT**

(45) Veröffentlichungstag und Bekanntmachung des Hinweises auf die Patenterteilung:
**12.12.2007 Patentblatt 2007/50**

(51) Int Cl.:
***H05B 41/282*** *(2006.01)*

(21) Anmeldenummer: **02011693.5**

(22) Anmeldetag: **03.06.2002**

(54) **Freischwingende Schaltungsanordnung**

Self-oscillating circuit arrangment

Cicuit auto-oscillant

(84) Benannte Vertragsstaaten:
**AT BE CH CY DE DK ES FI FR GB GR IE IT LI LU MC NL PT SE TR**

(30) Priorität: **01.08.2001 DE 10137305**

(43) Veröffentlichungstag der Anmeldung:
**05.02.2003 Patentblatt 2003/06**

(73) Patentinhaber: **Patent-Treuhand-Gesellschaft für elektrische Glühlampen mbH**
**81543 München (DE)**

(72) Erfinder: **Neidlinger, Thomas**
**89134 Blaustein (DE)**

(74) Vertreter: **Raiser, Franz**
**Patent-Treuhand-Gesellschaft für elektrische Glühlampen mbH**
**Postfach 22 16 34**
**80506 München (DE)**

(56) Entgegenhaltungen:
**EP-A- 1 111 765**
**DE-A- 4 330 859**
**US-A- 6 124 680**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

### Technisches Gebiet

Die vorliegende Erfindung betrifft eine freischwingende Schaltungsanordnung zum Betreiben einer Last mit mindestens einem Schaltelement, einer Freilaufdiode, die zur Hauptstromrichtung des mindestens einen Schaltelements antiparallel geschaltet ist, einem Lastkreis und einem Steuerschwingkreis, der mindestens eine Steuerinduktivität und mindestens eine Eigenkapazität des mindestens einen Schaltelements umfasst.

### Stand der Technik

In der Schrift DE 43 30 859 A (Hertzen) ist ein elektronisches Betriebsgerät für Entladungslampen beschrieben. Es handelt sich dabei um eine selbstschwingende Halbbrückenschaltung. Zu jedem Halbbrückentransistor ist ein Steuerkreis mit einem Steuerschalter vorgesehen, der beim Überschreiten des Stroms durch einen Halbbrückentransistor diesen abschaltet.

In der Schrift EP A 1 111 765 (Randazzo) ist eine Konverterschaltung beschrieben, die eine selbstschwingende Halbbrückentopologie aufweist. Jeder Halbbrückentransistor wird von einer integrierten Steuerschaltung gesteuert. Die Zeit in der ein Halbbrückentransistor eingeschaltet bleibt, wird von einem RC-Glied bestimmt.

In der Schrift US A 6 124 680 (Shoji) ist ebenfalls eine selbstschwingende Halbbrückenschaltung zum Betrieb einer Entladungslampe beschrieben. Die Schaltung ist besonders geeignet zum Erzeugen von Wechselspannung mit einer Frequenz im MHz Bereich. Der Laststrom fließt über Schaltmittel zum Erzeugen eines Spannungsabfalls. Damit diese Art der Rückkopplung zu einer selbsterhaltenden Schwingung führt, sind Phasenschieber, wie z. B. Spulen, zur Ansteuerung der Halbbrückentransistoren vorgesehen.

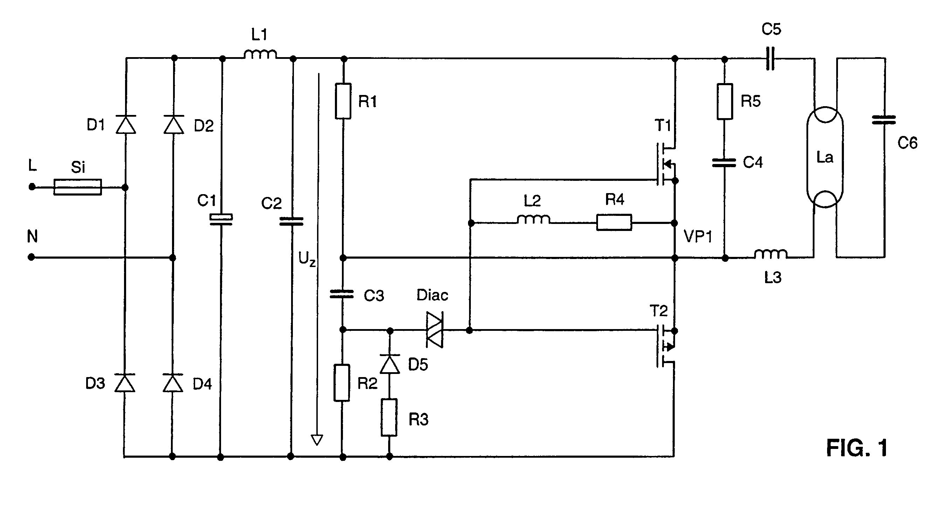

Eine gattungsgemäße freischwingende Schaltungsanordnung ist auch bekannt aus der DE 195 48 506. Der dortigen Figur 1 kann das Prinzip, nach dem diese Schaltung arbeitet, entnommen werden: eine im Lastkreis angeordnete Induktivität L2, vorliegend die Lampendrossel, ist mit zwei Hilfswicklungen HW1 und HW2 gekoppelt, wobei die Hilfswicklung HW1 im Steuerschwingkreis eines ersten Schaltelements T1, die Hilfswicklung HW2 im Steuerschwingkreis eines zweiten Schaltelements T2 angeordnet ist. Durch elektromagnetische Rückkopplung von Energie des Lastkreises in die jeweiligen Steuerschwingkreise wird die Oszillation der Schaltungsanordnung aufrecht erhalten.

Der Nachteil dieser Schaltungsanordnung besteht darin, dass Wickelgüter sehr teuer sind und daher neben Transistoren die Kosten einer Schaltungsanordnung wesentlich mitbestimmen.

Die Aufgabe der vorliegenden Erfindung besteht deshalb darin, die gattungsgemäße freischwingende Schaltungsanordnung derart weiterzubilden, dass die Aufrechterhaltung einer Oszillation der Schwingung ermöglicht wird, ohne dass hierzu eine elektromagnetische Kopplung von Bauteilen des Lastkreises mit Bauteilen des Steuerschwingkreises nötig wäre.

### Darstellung der Erfindung

Diese Aufgabe wird erfindungsgemäß dadurch gelöst, dass bei der gattungsgemäßen freischwingenden Schaltungsanordnung das mindestens eine Schaltelement eine Steuerelektrode, eine Arbeitselektrode und eine Bezugselektrode aufweist, wobei zwischen der Steuerelektrode und der Arbeitselektrode eine Kapazität wirkt, die derart mit dem Steuerschwingkreis gekoppelt ist, dass durch den Lade- und Entladestrom dieser Kapazität Energie in den Steuerschwingkreis eingespeist wird, wobei die Schaltungsanordnung keine Bauelemente zur Einspeisung von Energie in den Steuerschwingkreis durch elektromagnetische Kopplung aufweist.

Die Erfindung basiert auf der Erkenntnis, dass die zur Aufrechterhaltung der Schwingung notwendige Energie über eine Kapazität dem Steuerschwingkreis zugeführt werden kann. Ein teurer, oftmals individuell angefertigter Übertrager ist damit nicht mehr nötig.

Ein weiterer Vorteil der erfindungsgemäßen Schaltungsanordnung besteht darin, dass sich die Schaltungsanordnung mit einer geringeren Anzahl von Bauelementen realisieren lässt.

Bei einer besonders vorteilhaften Ausführungsform weist das eine Schaltelement eine Miller-Kapazität auf, wobei die zwischen der Steuerelektrode und der Arbeitselektrode des Schaltelements wirkende Kapazität die Miller-Kapazität des mindestens einen Schaltelements umfasst. Miller-Kapazitäten treten beispielsweise bei Feldeffekttransistoren auf. Je nach Auslegung der Schaltung kann es möglich sein, dass die Miller-Kapazität des mindestens eine Schaltelements alleine genügt, den Steuerschwingkreis zur Aufrechterhaltung der Schwingung mit Energie zu versorgen. Sollte die Miller-Kapazität alleine nicht genügen, kann ihr eine zusätzliche diskrete Kapazität parallelgeschaltet werden.

Besonders vorteilhaft ist es daher, den Steuerschwingkreis und die Miller-Kapazität des mindestens einen Schaltelements derart aufeinander abzustimmen, dass die Schwingung des Steuerschwingkreises allein durch den Lade- und Entladestrom der Miller-Kapazität des mindestens einen Schaltelements aufrechterhalten wird. Dies resultiert in einer weiteren Einsparung von Bauelementen. Es kann jedoch - wie erwähnt - auch vorgesehen werden, zu der Miller-Kapazität des mindestens einen Schaltelements eine Zusatzkapazität parallel zu schalten, wobei die Schwingung des Steuerschwingkreises durch den Lade- und Entladestrom der Miller-Kapazität und der Zusatzkapazität des mindestens einen Schaltelements aufrechterhalten wird.

Als Eigenkapazität des mindestens einen Schaltelements kann dessen zwischen Steuer- und Bezugselektrode vorhandene Eingangskapazität verwendet werden.

Bevorzugt weist die erfindungsgemäße Schaltungsanordnung ein erstes und ein zweites Schaltelement auf, wobei das erste und das zweite Schaltelement komplementär ausgeführt sind und mit einem gemeinsamen Steuerschwingkreis gekoppelt sind. Die komplementäre Ausführung der Schaltelemente ermöglicht die Verwendung eines gemeinsamen Steuerschwingkreises für beide Schaltelemente. Hierbei ist es bevorzugt, wenn jedes Schaltelement eine Steuerelektrode, eine Arbeitselektrode und eine Bezugselektrode aufweist, wobei die Steuerelektroden miteinander unter Bildung eines ersten Verbindungspunkts und die Bezugselektroden unter Bildung eines zweiten Verbindungspunkts miteinander verbunden sind, wobei die Steuerinduktivität zwischen den ersten und den zweiten Verbindungspunkt gekoppelt ist.

Es kann jedoch auch vorgesehen werden, dass die Schaltungsanordnung ein erstes und ein zweites Schaltelement aufweist, die vom selben Typ sind, wobei das erste Schaltelement mit einem ersten Steuerschwingkreis und das zweite Schaltelement mit einem zweiten Steuerschwingkreis gekoppelt ist. Wiederum ist es bevorzugt, wenn jedes Schaltelement eine Steuerelektrode, eine Arbeitselektrode und eine Bezugselektrode aufweist, wobei die Bezugselektrode des ersten Schaltelements mit der Arbeitselektrode des zweiten Schaltelements verbunden ist und die jeweilige Steuerinduktivität zwischen die jeweilige Steuer- und Bezugselektrode des jeweiligen Schaltelements gekoppelt ist. Diese Realisierung weist den Vorteil auf, dass zwei Schaltelemente von identischem Typ verwendet werden können, wobei dadurch auch das elektrische Verhalten identisch ist. Bevorzugt ist das erste und das zweite Schaltelement in Halbbrückenanordnung angeordnet.

Die Last ist bevorzugt ein Leuchtmittel, vorzugsweise eine Niederdruckentladungslampe. Es ist jedoch auch möglich, die Schaltung für andere Arten von Lasten einzusetzen.

Für den Fall, dass die Eingangskapazität des mindestens einen Schaltelements für eine Realisierung der Schaltungsanordnung ungünstig dimensioniert ist, ist es bevorzugt, der Eingangskapazität des mindestens einen Schaltelements eine diskrete Ergänzungskapazität parallel zu schalten. Durch diese Möglichkeit ergeben sich weitere Freiheitsgrade zur Dimensionierung des Steuerschwingkreises.

Der Lastkreis weist bevorzugt einen Serienschwingkreis mit einer Induktivität, einer zur Last parallel geschalteten Kapazität und mindestens einer Auskoppelkapazität auf. Die Induktivität ist bevorzugt als Strombegrenzungs- und Resonanzinduktivität dimensioniert.

Das mindestens eine Schaltelement ist bevorzugt ein Bipolartransistor oder ein MOS-Feldeffekttransistor. Für den Fall, dass die Schaltungsanordnung mit mindestens einen MOS-Feldeffekttransistor realisiert wird, kann die Bodydiode des MOS-Feldeffekttransistors die antiparallel geschaltete Freilaufdiode realisieren. Bei einer Realisierung des mindestens einen Schaltelements als Bipolartransistor ist eine diskrete Diode als Freilaufdiode vorzusehen.

Weitere vorteilhafte Weiterbildungen der Erfindung sind in den Unteransprüchen definiert.

**Beschreibung der Zeichnungen**

Ein Ausführungsbeispiel der Erfindung wird im Folgenden unter Hinweis auf die beigefügten Zeichnungen näher beschrieben. Es stellen dar:

| | |
|---|---|
| Figur 1 | einen Schaltplan eines Vorschaltgeräts zum Betreiben eines Leuchtmittels mit einer erfindungsgemäßen freischwingenden Schaltungsordnung; |
| Figur 2 | einen Ausschnitt des Vorschaltgeräts von Figur 1, wobei die Transistorkapazitäten gestrichelt eingezeichnet sind; |
| Figur 3 | den Ausschnitt von Figur 2 mit zusätzlichen Kapazitäten zur Erhöhung der Eingangskapazitäten und der Miller-Kapazitäten der Transistoren; |
| Figur 4a bis 4 g. | eine zeitliche Abfolge der Stromflüsse wie sie in dem Ausschnitt gemäß Figur 2 auftreten; und |
| Figur 5 | den zeitlichen Verlauf verschiedener Größen des Ausschnitts von Figur 2. |

Das in Figur 1 dargestellte Vorschaltgerät weist einen Netzanschluss L, N auf, der über eine Sicherung Si mit einem Gleichrichter umfassend vier Dioden D1, D2, D3, D4 verbunden ist. Die von einem Kondensator C1 geglättete Gleichspannung wird über einen Filter mit einer Induktivität L1 und einem Kondensator C2 als sogenannte Zwischenkreisspannung $U_Z$ der freischwingenden Schaltungsanordnung zur Verfügung gestellt. Aufgrund der Spannung $U_Z$ wird der Kondensator C3 über die Widerstände R1 und R2 aufgeladen. Die Schaltung umfasst weiterhin zwei MOS-Feldeffekttransistoren T1, T2, wobei der Drain-Anschluss von Transistor T1 mit dem Plus-Anschluss des Kondensators C2, der Drain-Anschluss des Transistors T2 mit dem Minus-Anschluss des Kondensators C2 verbunden ist. Die Source-Anschlüsse der beiden Transistoren T1, T2 sind unter Bildung eines Verbindungspunkts VP1 miteinander verbunden, wobei der Verbindungspunkt VP1 mit dem plusseitigen Anschluss des Kondensator C3 verbunden ist. Der minusseitige Anschluss des Kondensators C3 ist über eine Diode D5 und einen Widerstand R3 mit Masse verbunden, wobei die Diode D5 und der Widerstand R3 dafür sorgen, dass der Kondensator C3 im Betrieb der Schaltungsanordnung entladen wird, das heißt, wenn der Transistor T2 leitend geschaltet ist, damit der Diac, der zwischen den minusseitigen Anschluss des Kondensators C3 und die beiden Gate-Anschlüsse der beiden Transistoren T1, T2 geschaltet ist, während des Betriebs der Schaltungsanordnung nicht in störender Weise zündet. Zwischen den Verbindungspunkt VP1 und die miteinander verbundenen Gate-Anschlüsse der Transistoren T1, T2 ist die Serienschaltung einer Induktivität L2 und eines Widerstandes R4 angeordnet. Zwischen den Drain-Anschluss des Transistors T1 und dem Verbindungspunkt VP1 ist einerseits die Serienschaltung eines Widerstands R5 und eines Kondensators C4 angeordnet, wobei die Serienschaltung der Serienschaltung aus einem Kondensator C5, dem Leuchtmittel La sowie der Lampendrossel L3 parallel geschaltet ist, wobei dem Leuchtmittel La seinerseits ein Kondensator C5 parallel geschaltet ist.

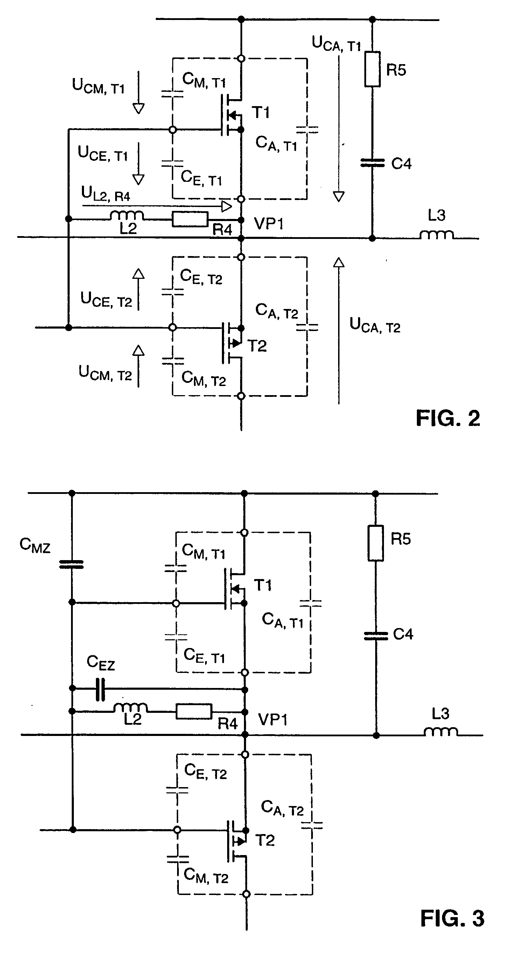

Figur 2 zeigt einen Ausschnitt des Vorschaltgeräts von Figur 1, wobei die Transistorkapazitäten gestrichelt eingezeichnet sind. Zwischen dem jeweiligen Gate- und dem jeweiligen Drain-Anschluss ist die jeweilige Miller-Kapazität $C_{M,T1}$ bzw. $C_{M,T2}$ angeordnet, zwischen dem jeweiligen Gate-Anschluss und dem jeweiligen Source-Anschluss ist die jeweilige Eingangskapazität $C_{E,T1}$ bzw. $C_{E,T2}$ angeordnet, während zwischen dem jeweiligen Drain- und dem jeweiligen Source-Anschluss die jeweilige Ausgangskapazität $C_{A,T1}$ bzw. $C_{A,T2}$ angeordnet ist.

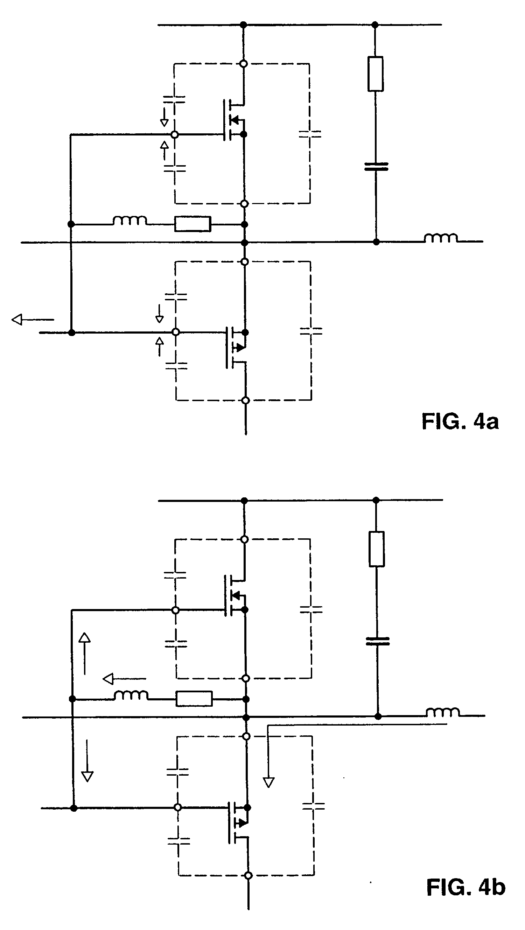

Für den Fall, dass die Transistoreingangskapazitäten $C_{E,T1}$, $C_{E,T2}$ und/oder die Miller-Kapazitäten $C_{M,T1}$ bzw. $C_{M,T2}$ zur Aufrechterhaltung einer Schwingung nicht ausreichend groß sind, zeigt Figur 3 eine bevorzugte Möglichkeit, diese zu vergrößern. Hierbei ist eine Kapazität $C_{MZ}$ den Miller-Kapazitäten $C_{M,T1}$, $C_{M,T2}$ parallel geschaltet, während eine Kapazität $C_{EZ}$ den Eingangskapazitäten $C_{E,T1}$, $C_{E,T2}$ parallel geschaltet ist.

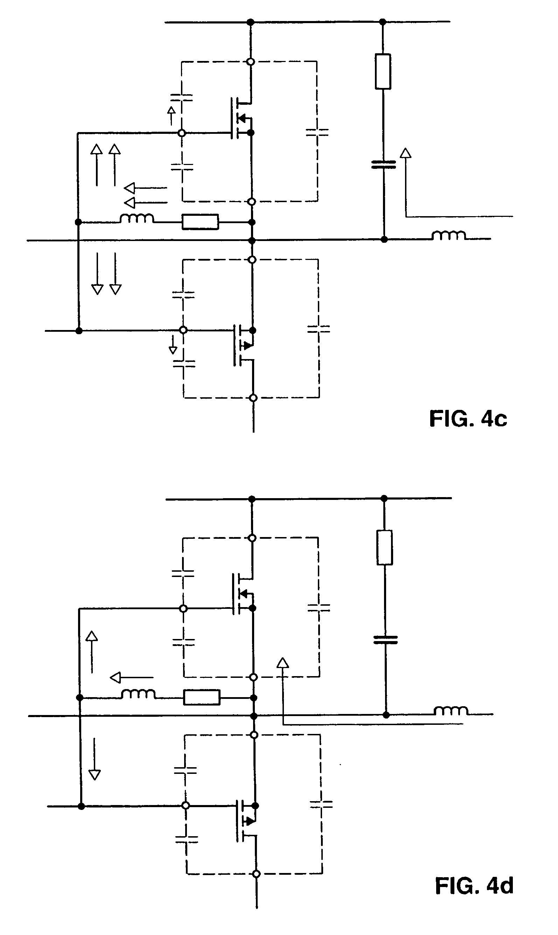

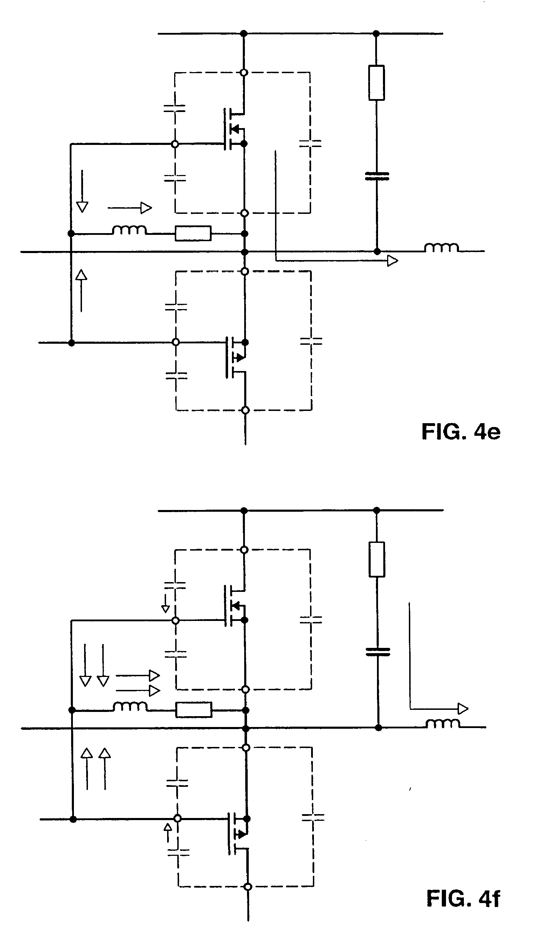

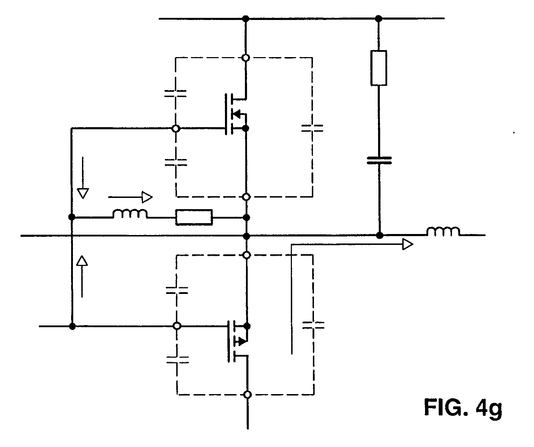

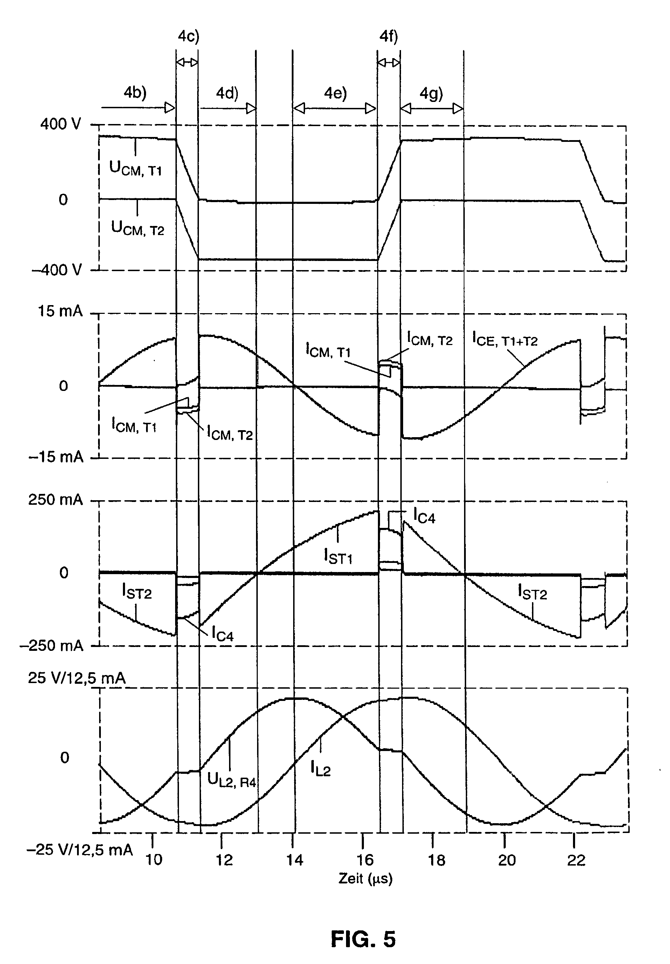

Figur 4 zeigt Momentaufnahmen der Stromflüsse in dem Schaltungsausschnitt von Figur 2 in zeitlicher Abfolge. Korrespondierend hierzu ist in Figur 5 der zeitliche Verlauf verschiedener Größen des Schaltungsausschnitts von Figur 2 mit Bezug auf die in Figur 2 eingezeichneten Spannungen dargestellt.

Bevor auf den Normalbetrieb, das heißt die Aufrechterhaltung einer Schwingung der freischwingenden Schaltungsanordnung eingegangen wird, sollen zunächst die Vorgänge erklärt werden, die ablaufen, bis es zur Entstehung einer sich selbst aufrechterhaltenden Schwingung kommt. Ausgegangen wird von einer über dem Kondensator C2 anliegenden Gleichspannung aufgrund derer der Kondensator C3 über die Widerstände R1, R2 aufgeladen wird. Aufgrund des Spannungsanstiegs über C3 steigt auch die am Diac anliegende Spannung. Überschreitet diese die Triggerschwelle des Diacs, so schaltet der Diac ein, wodurch ein negativer Spannungspuls auf die beiden Gate-Anschlüsse der komplementären Transistoren T1 und T2 gelangt. Hierdurch werden die Kapazitäten $C_{M,T1}$, $C_{E,T1}$ $C_{E,T2}$ geladen, während die Kapazität $C_{M,T2}$ entladen wird. Der in Figur 4a dargestellt Stromfluss stellt sich ein.

Infolge des negativen Spannungsimpulses an den Gate-Elektroden der beiden Transistoren, bewirkt durch das Zünden des Diacs, öffnet der Transistor T2, siehe den Stromfluss $I_{ST2}$ im Zeitabschnitt 4b in Figur 5. Dadurch beginnt im Lastkreis ein Strom über den Kondensator C5, den Kondensator C6 sowie die Induktivität L3 zu fließen. Der betragsmäßig zunehmende Strom $I_{ST2}$ fließt entgegen der in Figur 2 definierten Spannungsrichtung $U_{CA,T2}$ und hat somit negatives Vorzeichen. Durch den negativen Spannungsimpuls an der Gate-Elektrode wird gleichzeitig das Ansteigen eines Steuerstroms $I_{L2}$ durch die Induktivität L2 verursacht, weicher größtenteils die beiden Eingangskapazitäten $C_{E,T1}$, $C_{E,T2}$ der Transistoren T1, T2 erneut umlädt. Der Strom $I_{L2}$ wirkt der vom Diac gelieferten Spannung entgegen, so dass die zuvor negative Gate-Spannung abgebaut wird.

Mit Bezug auf Figur 5 ist der Beginn des Zeitraums 4c dadurch gekennzeichnet, dass nach Unterschreitung der Schwellspannung des Transistors T2 dieser schießt und der in der Induktivität L3 eingeprägte Laststrom nun über den Widerstand R5 fließt und den Kondensator C4 entlädt. Zeitgleich mit der Änderung der Spannung am Kondensator C4 ändert sich auch die Spannung über den Miller-Kapazitäten $C_{M,T1}$, $C_{M,T2}$ der beiden Transistoren T1, T2. Insbesondere wird hierdurch der Verbindungspunkt der beiden SourceElektroden fast auf die Spannung $U_Z$ gelegt, wobei dieser Spannungshub von den Miller-Kapazitäten $C_{M,T1}$, $C_{M,T2}$ in vollem Umfang mitgemacht wird. Die Spannungsänderung an den Miller-Kapazitäten $C_{M,T1}$, $C_{M,T2}$ bewirkt einen Stromfluss gemäß

$$I_C = C \cdot \frac{dU_C(t)}{dt} \quad .$$

Diese Lade- und Entladeströme $I_{CM,T1}$, $I_{CM,T2}$ bewirken einen zusätzlichen Stromfluss durch die Induktivität L2. In dieser Phase wird dem Steuerkreis über die Miller-Kapazitäten $C_{M,T1}$, $C_{M,T2}$ Energie zugeführt.

Der Beginn des Zeitraums 4d ist dadurch gekennzeichnet, dass nach Abfallen der Drain-Source-Spannung am Transistor T1 dessen innere Freilaufdiode leitend wird und somit den Hauptteil des Stromes der Induktivität L3 übernimmt. Sobald der Großteil des Laststroms über die Freilaufdiode des Transistors T1 fließt, siehe $I_{ST1}$ in Figur 5, sind die Umladevorgänge der Miller-Kapazitäten $C_{M,T1}$, $C_{M,T2}$ weitgehend abgeschlossen. Der in der Induktivität L2 eingeprägte Strom lädt nun hauptsächlich die beiden Eingangskapazitäten $C_{E,T1}$, $C_{E,T2}$ der beiden Transistoren T1, T2 um und bewirkt zunächst ein weiteres Abfallen der Gate-Spannung bis null und schließlich ein Ansteigen auf positive Spannungswerte. Nach Überschreiten der Schwellspannung des Transistors T1 wird dieser eingeschaltet. Der in der Induktivität L2 eingeprägte Strom klingt während der Einphase von T1 auf null ab, wodurch der Beginn des Zeitraums 4e gekennzeichnet ist. Die Eingangskapazitäten $C_{E,T1}$ und $C_{E,T2}$ der beiden Transistoren T1, T2 sind entsprechend geladen, so dass der Strom nun von den geladenen Kapazitäten zur Gate-Beschaltung L2, R4 fließen kann (ebenso wie im Lastkreis kommt es auch im Steuerkreis zu einer Stromumkehr). Der nun in umgekehrte Richtung fließende Steuerstrom $I_{L2}$ durch die Induktivität L2 wirkt der noch positiven Gate-Spannung entgegen. Die daraufhin abnehmende Gate-Spannung unterschreitet schließlich die Schwellspannung des Transistors T1, so dass dieser ausschaltet. Dies ist der Beginn des Zeitraums 4f von Figur 5. Der in der Induktivität L3 eingeprägte Strom fließt nun wieder über den Widerstand R5 und lädt den Kondensator C4. Zeitgleich mit der Änderung der Spannung am Kondensator C4 ändert sich auch die Spannung über den Miller-Kapazitäten $C_{M,T1}$, $C_{M,T2}$ der beiden Transistoren T1, T2. Die dadurch erzwungenen Lade- und Entladeströme $I_{CM,T1}$, $I_{CM,T2}$ bewirken erneut einen zusätzlichen Stromfluss durch die Induktivität L2, siehe das unterste Diagramm in Figur 5. In dieser Phase wird dem Steuerkreis abermals über die Miller-Kapazitäten $C_{M,T1}$, $C_{M,T2}$ Energie zugeführt. Nach Ansteigen der Spannung über der Miller-Kapazität $C_{M,T2}$ des Transistors T2 wird die interne Freilaufdiode des Transistors T2 leitend und übernimmt den Hauptteil des Stroms der Induktivität L3, siehe den Beginn des Zeitraums 4g. Sobald der Großteil des Laststroms über die Freilaufdiode des Transistors T2 fließt, sind die Miller-Umladevorgänge weitgehend abgeschlossen. Der in der Induktivität L2 eingeprägte Strom $I_{L2}$ lädt hauptsächlich die beiden Eingangskapazitäten $C_{E,T1}$, $C_{E,T2}$ der Transistoren T1, T2 um und bewirkt zunächst ein weiteres Abfallen der Gate-Spannung bis null und schließlich ein Ansteigen auf negative Spannungswerte.

Die Schaltvorgänge der Zeiträume 4b bis 4g der Figuren 4 und 5 laufen weiter sequentiell ab, so dass im Steuer- sowie im Lastkreis ein kontinuierlich hin- und herschwingender Stromfluss entsteht. Die Frequenz dieser anfänglichen Schwingung liegt etwas höher als die Resonanzfrequenz des Lastkreises. Durch Resonanzüberhöhung steigt schließlich die Spannung über dem Leuchtmittel La so stark an, dass dieses zündet. Der Großteil des Laststroms fließt nun über das Leuchtmittel La. Das Leuchtmittel selbst wirkt nach der Zündung fast wie ein rein ohmscher Verbraucher und dämpft den Schwingkreis in der Weise, dass sich schließlich die zum stabilen Betrieb notwendige Spannung über dem Leuchtmittel La einstellt.

Die Neuerung der vorliegenden Erfindung besteht prinzipiell darin, dem Steuerschwingkreis in den Zeiträumen 4 c und 4 f durch Lade- und Entladevorgänge der Miller-Kapazitäten $C_{M,T1}$, $C_{M,T2}$ der beiden Schaltelemente T1, T2 soviel Energie zuzuführen, dass eine Schwingung aufrechterhalten wird.

## Patentansprüche

1. Freischwingende Schaltungsanordnung zum Betreiben einer Last (La) mit mindestens einem Schaltelement (T1, T2), einer Freilaufdiode, die zur Hauptstromrichtung des mindestens einen Schaltelements (T1, T2) antiparallel geschaltet ist, einem Lastkreis (L3, C6, C5) und einem Steuerschwingkreis (L2, $C_{E,T1}$, $C_{E,T2}$), der mindestens eine Steuerinduktivität (L2) und mindestens eine Eigenkapazität ($C_{E,T1}$, $C_{E,T2}$) des mindestens einen Schaltelements (T1, T2) umfasst,
   wobei das mindestens eine Schaltelement (T1, T2) eine Steuerelektrode, eine Arbeitselektrode und eine Bezugselektrode aufweist und die Eigenkapazität ($C_{E,T1}$, $C_{E,T2}$) zwischen Steuer- und Bezugselektrode wirkt,
   **dadurch gekennzeichnet,**
   **dass** zwischen der Steuerelektrode und der Arbeitselektrode eine Kapazität ($C_{M,T1}$, $C_{M,T2}$) wirkt, die derart mit dem Steuerschwingkreis (L2, $C_{E,T1}$, $C_{E,T2}$) gekoppelt ist, dass durch den Lade- und Entladestrom ($I_{CM,T1}$, $I_{CM,T2}$) dieser Kapazität ($C_{M,T1}$, $C_{M,T2}$)genügend Energie zur Aufrechterhaltung einer Schwingung in den Steuerschwingkreis (L2, $C_{E,T1}$, $C_{E,T2}$) eingespeist wird, wobei die Schaltungsanordnung keine Bauelemente zur Einspeisung von Energie in den Steuerschwingkreis durch elektromagnetische Kopplung aufweist.

2. Schaltungsanordnung nach Anspruch 1,
   **dadurch gekennzeichnet,**
   **dass** das mindestens eine Schaltelement (T1, T2) eine Miller-Kapazität ($C_{M,T1}$, $C_{M,T2}$) aufweist und die zwischen der Steuerelektrode und der Arbeitselektrode des Schaltelements (T1, T2) wirkende Kapazität die Miller-Kapazität

($C_{M,T1}$, $C_{M,T2}$) des mindestens einen Schaltelements (T1, T2) umfasst.

3. Schaltungsanordnung nach Anspruch 2,
**dadurch gekennzeichnet,**
**dass** der Steuerschwingkreis (L2, $C_{E,T1}$, $C_{E,T2}$) und die Miller-Kapazität ($C_{M,T1}$, $C_{M,T2}$) des mindestens einen Schaltelements (T1, T2) derart aufeinander abgestimmt sind, dass die Schwingung des Steuerschwingkreises (L2, $C_{E,T1}$, $C_{E,T2}$) allein durch den Lade- und Entladestrom ($I_{CM,T1}$, $I_{CM,T2}$) der Miller-Kapazität ($C_{M,T1}$, $C_{M,T2}$) des mindestens einen Schaltelements (T1, T2) aufrechterhalten wird.

4. Schaltungsanordnung nach Anspruch 2,
**dadurch gekennzeichnet,**
**dass** zu der Miller-Kapazität ($C_{M,T1}$, $C_{M,T2}$) des mindestens einen Schaltelements (T1, T2) eine Zusatzkapazität ($C_{MZ}$) parallelgeschaltet ist, wobei die Schwingung des Steuerschwingkreises (L2, $C_{E,T1}$, $C_{E,T2}$) durch den Lade- und Entladestrom ($I_{CM,T1}$, $I_{CM,T2}$) der Miller-Kapazität und der Zusatzkapazität ($C_{MZ}$) des mindestens einen Schaltelements aufrechterhalten wird.

5. Schaltungsanordnung nach einem der vorhergehenden Ansprüche,
**dadurch gekennzeichnet,**
**dass** die Eigenkapazität des mindestens einen Schaltelements dessen zwischen Steuer- und Bezugselektrode vorhandene Eingangskapazität ($C_{E,T1}$, $C_{E,T2}$) ist.

6. Schaltungsanordnung nach einem der vorhergehenden Ansprüche,
**dadurch gekennzeichnet,**
**dass** sie ein erstes und ein zweites Schaltelement (T1, T2) aufweist, wobei das erste und das zweite Schaltelement (T1, T2) komplementär ausgeführt sind und mit einem gemeinsamen Steuerschwingkreis (L2, $C_{E,T1}$, $C_{E,T2}$) gekoppelt sind.

7. Schaltungsanordnung nach Anspruch 6,
**dadurch gekennzeichnet,**
**dass** jedes Schaltelement (T1, T2) eine Steuerelektrode, eine Arbeitselektrode und eine Bezugselektrode aufweist, wobei die Steuerelektroden miteinander unter Bildung eines ersten Verbindungspunkts und die Bezugselektroden unter Bildung eines zweiten Verbindungspunkts miteinander verbunden sind, wobei die Steuerinduktivität (L2) zwischen den ersten und den zweiten Verbindungspunkt gekoppelt ist.

8. Schaltungsanordnung nach einem der Ansprüche 1 bis 5,
**dadurch gekennzeichnet,**
**dass** sie ein erstes und ein zweites Schaltelement (T1, T2) aufweist, die vom selben Typ sind, wobei das erste Schaltelement (T1) mit einem ersten Steuerschwingkreis und das zweite Schaltelement (T2) mit einem zweiten Steuerschwingkreis gekoppelt ist.

9. Schaltungsanordnung nach Anspruch 8,
**dadurch gekennzeichnet,**
**dass** jedes Schaltelement (T1, T2) eine Steuerelektrode, eine Arbeitselektrode und eine Bezugselektrode aufweist, wobei die Bezugselektrode des ersten Schaltelements (T1) mit der Arbeitselektrode des zweiten Schaltelements (T2) miteinander verbunden ist und die jeweilige Steuerinduktivität zwischen die jeweilige Steuer- und Bezugselektrode des jeweiligen Schaltelements gekoppelt ist.

10. Schaltungsanordnung nach einem der Ansprüche 6 bis 9,
**dadurch gekennzeichnet,**
**dass** das erste und das zweite Schaltelement (T1, T2) in Halbbrückenanordnung angeordnet sind.

11. Schaltungsanordnung nach einem der vorhergehenden Ansprüche,
**dadurch gekennzeichnet,**
**dass** die Last ein Leuchtmittel (La), vorzugsweise eine Niederdruckentladungslampe, ist.

12. Schaltungsanordnung nach einem der vorhergehenden Ansprüche,
**dadurch gekennzeichnet,**
**dass** der Eingangskapazität ($C_{E,T1}$, $C_{E,T2}$) des mindestens einen Schaltelements (T1, T2) eine Ergänzungskapazität

($C_{EZ}$) parallelgeschaltet ist.

13. Schaltungsanordnung nach einem der vorhergehenden Ansprüche,
**dadurch gekennzeichnet,**
**dass** der Lastkreis einen Serienschwingkreis mit einer Induktivität (L3), einer zur Last parallel geschalteten Kapazität (C6) und mindestens einer Auskoppelkapazität (C5) umfasst.

14. Schaltungsanordnung nach einem der vorhergehenden Ansprüche,
**dadurch gekennzeichnet,**
**dass** das mindestens eine Schaltelement (T1, T2) ein MOS-Feldeffekttransistor ist und die dem mindestens einen Schaltelement (T1, T2) antiparallel geschaltete Freilaufdiode dessen Bodydiode.

**Claims**

1. Free-running circuit arrangement for operating a load (La), having at least one switching element (T1, T2), a freewheeling diode that is connected in an anti-parallel fashion relative to the main current direction of the at least one switching element (T1, T2), a load circuit (L3, C6, C5) and a control resonant circuit (L2, $C_{E,T1}$, $C_{E,T2}$) which comprises at least one control inductor (L2) and at least one self-capacitance ($C_{E,T1}$, $C_{E,T2}$) of the at least one switching element (T1, T2), wherein the at least one switching element (T1, T2) has a control electrode, a working electrode and a reference electrode, and the self-capacitance ($C_{E, T1}$, $C_{E, T2}$) acts between control electrode and reference electrode, **characterized in that** there acts between the control electrode and the working electrode a capacitance ($C_{M,T1}$, $C_{M,T2}$) that is coupled to the control resonant circuit (L2, $C_{E,T1}$, $C_{E,T2}$) in such a way that sufficient energy to maintain an oscillation is fed into the control resonant circuit (L2, $C_{E,T1}$, $C_{E,T2}$) by the charging and discharging current ($I_{CM,T1}$, $I_{CM,T2}$) of this capacitance ($C_{M,T1}$, $C_{M,T2}$), the circuit arrangement having no components for feeding energy into the control resonant circuit by electromagnetic coupling.

2. Circuit arrangement according to Claim 1, **characterized in that** the at least one switching element (T1, T2) has a Miller capacitance ($C_{M,T1}$, $C_{M,T2}$), and the capacitance acting between the control electrode and the working electrode on the switching element (T1, T2) comprises the Miller capacitance ($C_{M,T1}$, $C_{M,T2}$) of the at least one switching element (T1, T2).

3. Circuit arrangement according to Claim 2, **characterized in that** the control resonant circuit (L2, $C_{E,T1}$, $C_{E,T2}$) and the Miller capacitance ($C_{M,T1}$, $C_{M,T2}$) of the at least one switching element (T1, T2) are tuned to one another in such a way that the oscillation of the control resonant circuit (L2, $C_{E,T1}$, $C_{E,T2}$) is maintained solely by the charging and discharging currents ($I_{CM,T1}$, $I_{CM,T2}$) of the Miller capacitance ($C_{M,T1}$, $C_{M,T2}$) of the at least one switching element (T1, T2).

4. Circuit arrangement according to Claim 2, **characterized in that** an additional capacitance ($C_{MZ}$) is connected in parallel with the Miller capacitance ($C_{M,T1}$, $C_{M,T2}$) of the at least one switching element (T1, T2), the oscillation of the control resonant circuit (L2, $C_{E,T1}$, $C_{E,T2}$) being maintained by the charging and discharging currents ($I_{CM,T1}$, $I_{CM,T2}$) of the Miller capacitance and of the additional capacitance ($C_{MZ}$) of the at least one switching element.

5. Circuit arrangement according to one of the preceding claims, **characterized in that** the self-capacitance of the at least one switching element is a self-capacitance ($C_{E,T1}$, $C_{E,T2}$) of the latter present between control and reference electrodes.

6. Circuit arrangement according to one of the preceding claims, **characterized in that** it has a first and a second switching element (T1, T2), the first and the second switching elements (T1, T2) being of complementary design and being coupled to a common control resonant circuit (L2, $C_{E,T1}$, $C_{E,T2}$).

7. Circuit arrangement according to Claim 6, **characterized in that** each switching element (T1, T2) has a control electrode, a working electrode and a reference electrode, the control electrodes being connected to one another with the formation of a first tie point, and the reference electrodes being connected to one another with the formation of a second tie point, the control inductor (L2) being coupled between the first and the second tie point.

8. Circuit arrangement according to one of Claims 1 to 5, **characterized in that** it has a first and a second switching element (T1, T2) that are of the same type, the first switching element (T1) being coupled to a first control resonant circuit, and the second switching element (T2) being coupled to a second control resonant circuit.

9. Circuit arrangement according to Claim 8, **characterized in that** each switching element (T1, T2) has a control electrode, a working electrode and a reference electrode, the reference electrode of the first switching element (T1) being connected to the working electrode of the second switching element (T2), and the respective control inductor being coupled between the respective control and reference electrodes of the respective switching element.

10. Circuit arrangement according to one of Claims 6 to 9, **characterized in that** the first and the second switching element (T1, T2) are arranged in a half-bridge arrangement.

11. Circuit arrangement according to one of the preceding claims, **characterized in that** the load is an illuminating means (La), preferably a low-pressure discharge lamp.

12. Circuit arrangement according to one of the preceding claims, **characterized in that** a supplementary capacitance ($C_{EZ}$) is connected in parallel with the input capacitance ($C_{E,T1}$, $C_{E,T2}$) of the at least one switching element (T1, T2).

13. Circuit arrangement according to one of the preceding claims, **characterized in that** the load circuit comprises a series tuned circuit with an inductor (L3), a capacitance (C6) connected in parallel with the load and at least one decoupling capacitance (C5).

14. Circuit arrangement according to one of the preceding claims, **characterized in that** the at least one switching element (T1, T2) is an MOS field effect transistor, and the freewheeling diode connected in an anti-parallel fashion to the at least one switching element (T1, T2) is the body diode of the latter.

**Revendications**

1. Circuit auto-oscillant pour faire fonctionner une charge (La), comportant au moins un élément commutateur (T1, T2), une diode de roue libre qui est branchée en parallèle tête-bêche par rapport au sens de courant principal du ou des éléments commutateurs (T1, T2), un circuit de charge (L3, C6, C5) et un circuit oscillant de commande (L2, $C_{E,T1}$, $C_{E,T2}$) qui comprend au moins une inductance de commande (L2) et au moins une capacité propre ($C_{E,T1}$, $C_{E,T2}$) dudit au moins un élément commutateur (T1, T2),

   le ou les éléments commutateurs (T1, T2) comportant une électrode de commande, une électrode de travail et une électrode de référence et la capacité propre ($C_{E,T1}$, $C_{E,T2}$) agissant entre l'électrode de commande et l'électrode de référence,
   **caractérisé par le fait que**
   entre l'électrode de commande et l'électrode de travail agit une capacité ($C_{M,T1}$, $C_{M,T2}$) qui est couplée de telle sorte avec le circuit oscillant de commande (L2, $C_{E,T1}$, $C_{E,T2}$) que, par le courant de charge et de décharge ($I_{CM,T1}$, $I_{CM,T2}$) de cette capacité ($C_{M,T1}$, $C_{M,T2}$), suffisamment d'énergie est introduite dans le circuit oscillant de commande (L2, $C_{E,T1}$, $C_{E,T2}$) pour le maintien d'une oscillation, le circuit ne comportant pas de composant pour l'introduction d'énergie dans le circuit oscillant de commande par couplage électromagnétique.

2. Circuit selon la revendication 1,
   **caractérisé par le fait que** le au moins un élément commutateur (T1, T2) comporte une capacité de Miller ($C_{M,T1}$, $C_{M,T2}$) et que la capacité agissant entre l'électrode de commande et l'électrode de travail de l'élément commutateur (T1, T2) comprend la capacité de Miller ($C_{M,T1}$, $C_{M,T2}$) du au moins un élément commutateur (T1, T2).

3. Circuit selon la revendication 2,
   **caractérisé par le fait que** le circuit oscillant de commande (L2, $C_{E,T1}$, $C_{E,T2}$) et la capacité de Miller ($C_{M,T1}$, $C_{M,T2}$) du au moins un élément commutateur (T1, T2) sont accordés ensemble de telle sorte que l'oscillation du circuit oscillant de commande (L2, $C_{E,T1}$, $C_{E,T2}$) est maintenue seulement par le courant de charge et de décharge ($I_{CM,T1}$, $I_{CM,T2}$) de la capacité de Miller ($C_{M,T1}$, $C_{M,T2}$) du ou des éléments commutateurs (T1, T2).

4. Circuit selon la revendication 2,
   **caractérisé par le fait qu'**une capacité supplémentaire ($C_{MZ}$) est branchée en parallèle avec la capacité de Miller ($C_{M,T1}$, $C_{M,T2}$) du ou des éléments commutateurs (T1, T2), l'oscillation du circuit oscillant de commande (L2, $C_{E,T1}$, $C_{E,T2}$) étant maintenue par le courant de charge et de décharge ($I_{CM,T1}$, $I_{CM,T2}$) de la capacité de Miller et de la capacité supplémentaire ($C_{MZ}$) du ou des éléments commutateurs.

5. Circuit selon l'une des revendications précédentes,
**caractérisé par le fait que** la capacité propre du au moins un élément commutateur est la capacité d'entrée de celui-ci présente entre l'électrode de commande et l'électrode de référence ($C_{E,T1}$, $C_{E,T2}$).

6. Circuit selon l'une des revendications précédentes,
**caractérisé par le fait qu'**il comporte un premier et un deuxième élément commutateur (T1, T2), le premier et le deuxième élément commutateur (T1, T2) étant réalisés complémentaires et étant couplés avec un circuit oscillant de commande (L2, $C_{E,T1}$, $C_{E,T2}$) commun.

7. Circuit selon la revendication 6,
**caractérisé par le fait que** chaque élément commutateur (T1, T2) comporte une électrode de commande, une électrode de travail et une électrode de référence, les électrodes de commande étant reliées entre elles en formant un premier point de liaison et les électrodes de référence étant reliées entre elles en formant un deuxième point de liaison, l'inductance de commande (L2) étant couplée entre le premier point et le deuxième point de liaison.

8. Circuit selon l'une des revendications 1 à 5,
**caractérisé par le fait qu'**il comporte un premier et un deuxième élément commutateur (T1, T2) qui sont du même type, le premier élément commutateur (T1) étant couplé avec un premier circuit oscillant de commande et le deuxième élément commutateur (T2) étant couplé avec un deuxième circuit oscillant de commande.

9. Circuit selon la revendication 8,
**caractérisé par le fait que** chaque élément commutateur (T1, T2) comporte une électrode de commande, une électrode de travail et une électrode de référence, l'électrode de référence du premier élément commutateur (T1) étant reliée à l'électrode de travail du deuxième élément commutateur (T2) et l'inductance de commande respective étant couplée entre l'électrode de commande respective et l'électrode de référence respective de l'élément commutateur respectif.

10. Circuit selon l'une des revendications 6 à 9,
**caractérisé par le fait que** le premier et le deuxième élément commutateur (T1, T2) sont disposés selon un montage en demi-pont.

11. Circuit selon l'une des revendications précédentes,
**caractérisé par le fait que** la charge est un moyen d'éclairage (La), de préférence une lampe à décharge à basse pression.

12. Circuit selon l'une des revendications précédentes,
**caractérisé par le fait qu'**une capacité complémentaire ($C_{EZ}$) est branchée en parallèle avec la capacité d'entrée ($C_{E,T1}$, $C_{E,T2}$) du ou des éléments commutateurs (T1, T2).

13. Circuit selon l'une des revendications précédentes,
**caractérisé par le fait que** le circuit de charge comprend un circuit oscillant en série avec une inductance (L3), avec une capacité (C6) branchée en parallèle avec la charge et avec au moins une capacité de découplage (C5).

14. Circuit selon l'une des revendications précédentes,
**caractérisé par le fait que** le ou les éléments commutateurs (T1, T2) sont des transistors à effet de champ MOS et que la diode de roue libre branchée tête-bêche en parallèle avec le au moins un élément commutateur (T1, T2) est sa diode parasite dite Body.

C6
La
C5
R5
C4
L3
VP1
T1
T2
R4
L2
Diac
D5
R3
R1
C3
R2
U_z
L1
C2
C1
D2
D4
D1
D3
Si
L
N

FIG. 1

U_CA, T1
R5
U_CM, T1
C_M, T1
T1
C_A, T1
U_CE, T1
C4
C_E, T1
U_L2, R4
L3
L2
R4
VP1
C_E, T2
U_CE, T2
C_A, T2
U_CA, T2
T2
U_CM, T2
C_M, T2

FIG. 2

C_MZ
R5
C_M, T1
T1
C_A, T1
C4
C_E, T1
C_EZ
L2
R4
VP1
L3
C_E, T2
C_A, T2
T2
C_M, T2

FIG. 3

FIG. 4a

FIG. 4b

FIG. 4c

FIG. 4d

FIG. 4e

FIG. 4f

FIG. 4g

4c)
4f)
4b)
4d)
4e)
4g)
400 V
0
–400 V
U_CM, T1
U_CM, T2
15 mA
0
–15 mA
I_CM, T1
I_CM, T2
I_CE, T1+T2
250 mA
0
–250 mA
I_C4
I_ST1
I_ST2
25 V/12,5 mA
0
–25 V/12,5 mA
U_L2, R4
I_L2
10
12
14
16
18
20
22
Zeit (µs)

FIG. 5

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 4330859 A, Hertzen
- EP 1111765 A, Randazzo
- US 6124680 A, Shoji
- DE 19548506